# EUROPEAN PATENT APPLICATION

(11) **EP 4 546 679 A1**
(43) Date of publication of application: **30.04.2025**
(21) Application number: 23830111.3
(22) Date of filing: 25.06.2023
(51) Int. Cl.: H04L 1/00

(54) **FORWARD ERROR CORRECTION CODE TYPE SWITCHING METHOD, AND DEVICE AND STORAGE MEDIUM**

(30) Priority: 28.06.2022 CN 202210753469
(71) Applicant: ZTE Corporation, Shenzhen, Guangdong 518057 (CN)
(72) Inventor: JIANG, Yi, Shenzhen, Guangdong 518057 (CN)
(74) Representative: Aipex B.V.
(86) International application number: PCT/CN2023/102036
(87) International publication number: WO 2024/001933

(57) **Abstract**

Provided are a forward error correction code switching method and device and a storage medium. A forward error correction code switching method applied to a first device includes determining a target operational forward error correction code according to a predetermined transmission channel quality and a target traffic requirement; and notifying a second device of the target operational forward error correction code to enable the second device to switch a current operational forward error correction code to the target operational forward error correction code and decode user traffic data according to the target operational forward error correction code.

## Description

### TECHNICAL FIELD

The present application relates to the field of communication technology and, in particular, to a forward error correction code switching method and device and a storage medium.

### BACKGROUND

In an uplink direction of a passive optical network (PON) system, multiple different forward error correction (FEC) codes may be used for encoding and decoding so that the performance of the PON system can be improved under different channel conditions, thereby achieving high throughput, high redundancy and other capabilities under the sensitivity condition specified in standards. In the uplink direction, optical network units (ONUs) transmit signals to an optical line terminal (OLT), and each ONU may enhance its adaptability to channels by using different FEC codes. However, in a downlink direction, the OLT transmits a signal to the ONUs in a broadcast or multicast form, FEC code can only be enabled or disabled, and thus the switching between multiple FEC codes is not supported. Therefore, how to support the switching between multiple FEC codes in the downlink direction of the PON is an urgent problem to be solved.

### SUMMARY

In view of this, embodiments of the present application provide a forward error correction code switching method and device and a storage medium so that a process of switching between different FEC codes in a downlink direction is implemented.

An embodiment of the present application provides a forward error correction code switching method. The method is applied to a first device and includes the following:

A target operational forward error correction code is determined according to a predetermined transmission channel quality and a target traffic requirement.

The target operational forward error correction code is notified to the second device to enable the second device to switch a current operational forward error correction code to the target operational forward error correction code and decodes user traffic data according to the target operational forward error correction code.

An embodiment of the present application provides a forward error correction code switching method. The method is applied to a second device and includes the following:
A notification of a target operational forward error correction code is received from a first device.

A current operational forward error correction code is switched to the target operational forward error correction code.

User traffic data is decoded according to the target operational forward error correction code.

An embodiment of the present application provides a forward error correction code switching device including a memory and at least one processor.

The memory is configured to store at least one program.

The at least one program is executed by the at least one processor to cause the at least one processor to perform the method of any preceding embodiment.

An embodiment of the present application provides a storage medium, which is configured to store a computer program, where the computer program is executed by a processor to cause the processor to perform the method of any preceding embodiment.

### BRIEF DESCRIPTION OF DRAWINGS

FIG. 1 is a structure diagram of a PON system according to an embodiment of the present application.
FIG. 2 is a schematic diagram of signal transmission in a PON system according to an embodiment of the present application.
FIG. 3 is a structure diagram of an FEC encoding module according to an embodiment of the present application.
FIG. 4 is a structure diagram of an FEC decoding module according to an embodiment of the present application.
FIG. 5 is a flowchart of an FEC code switching method according to an embodiment of the present application.
FIG. 6 is a flowchart of another FEC code switching method according to an embodiment of the present application.
FIG. 7 is a schematic diagram illustrating the implementation of a message mechanism for FEC code switching between an OLT and an ONU according to an embodiment of the present application.
FIG. 8 is a schematic diagram illustrating a configuration of a downlink physical layer operations, administration and maintenance (PLOAM) message format for FEC code switching according to an embodiment of the present application.
FIG. 9 is a schematic diagram illustrating a configuration of an uplink PLOAM message response format for FEC code switching according to an embodiment of the present application.
FIG. 10 is a flowchart of detection of an optical channel by a newly online ONU according to an embodiment of the present application.
FIG. 11 is a flowchart of a response of an ONU in normal operation to an FEC test message according to an embodiment of the present application.
FIG. 12 is a flowchart of switching of an operational FEC code according to an embodiment of the present application.
FIG. 13 is a block diagram of an FEC code switching apparatus according to an embodiment of the present application.
FIG. 14 is a block diagram of another FEC code switching apparatus according to an embodiment of the present application.
FIG. 15 is a structure diagram of an FEC code switching device according to an embodiment of the present application.

### DETAILED DESCRIPTION

Embodiments of the present application are described hereinafter in conjunction with drawings. The present application is described hereinafter in conjunction with embodiments and drawings. The examples described hereinafter are intended to explain the present application and not to limit the scope of the present application.

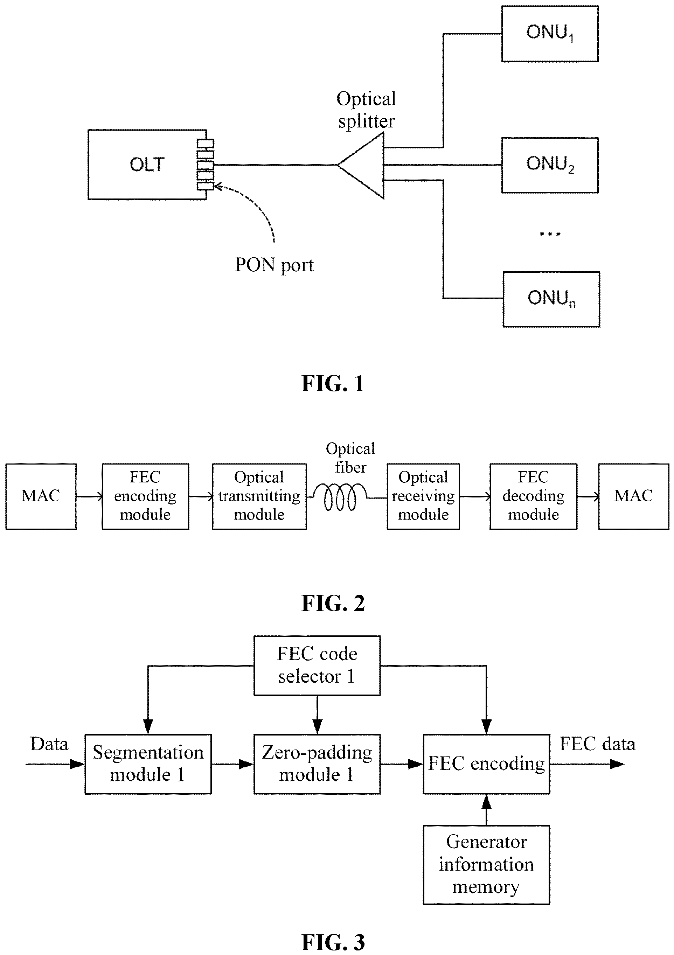

To facilitate an understanding of solutions of the present application, the structure of a PON system used in the solutions of the present application is described. FIG. 1 is a structure diagram of a PON system according to an embodiment of the present application. As shown in FIG. 1, the PON system includes an OLT and multiple ONUs, where the OLT is connected to the ONUs via an optical distribution network (ODN). The ODN includes passive optical devices such as optical fibers and an optical splitter. The OLT device may include multiple PON ports, and each PON port may be connected to several ONUs. In a downlink direction, the OLT sends a signal and the ONUs receive the signal. In an uplink direction, the ONUs send signals and the OLT receives the signals.

FIG. 2 is a schematic diagram of signal transmission in a PON system according to an embodiment of the present application. As shown in FIG. 2, in the PON system, an electrical signal is processed in a media access control (MAC) chip, encoded by an FEC encoding module, and sent to an optical transmitting module in an OLT or an ONU for electro-optic conversion and transmission; then, after received by an optical receiving module in an ONU or an OLT via the ODN, an optical signal is converted into an electrical signal, decoded by an FEC decoding module in the ONU or the OLT, and sent to a MAC chip at a receiving end to be processed subsequently. In the uplink direction, the ONU adopts a burst communication manner, and each ONU sends different data. In the downlink direction, the OLT adopts a broadcast communication manner, and each ONU receives the same broadcasted data. After receiving data, both the OLT and the ONU perform clock synchronization and FEC decoding and then further decapsulate and process the decoded data.

In embodiments of the present application, multiple FEC codes are designed to be switchable for broadcasted data in the downlink direction of the PON system and the broadcasted data is decoded in a decoding manner at the receiving end so that FEC code switching of a broadcast channel of the PON system can be achieved without changing a data format of a downlink frame, thereby improving the availability of the system. In the G.9804.2 standard of the International Telecommunication Union Telecommunication Standardization Sector (ITU-T), low-density parity-check (LDPC) (17280, 14592) is used for FEC encoding by default in the downlink direction, the corresponding mother code has a length of 17664 bits, information bits have a length of 14592 bits, and check bits have a length of 3072 bits. Partially deleting the information bits of the mother code is referred to as shortening and partially removing the check bits of the mother code is referred to as puncturing. The two operations can form high-margin LDPC codes and high-throughput LDPC codes, respectively.

FIG. 3 is a structure diagram of an FEC encoding module according to an embodiment of the present application. To implement free switching between multiple different FEC codes in the downlink direction of the PON system, the structure of the FEC encoding module at an OLT side is designed as shown in FIG. 3. In the OLT, an FEC code selector 1 is connected to a segmentation module 1, a zero-padding module 1 and the FEC encoding module separately to control encoding. In the embodiment, an implementation process of the FEC encoding module includes the following:
In S1, after data reaches the segmentation module 1, the data is segmented into different data segments according to different FEC codes, where each segment constitutes information bits of an FEC codeword.
In S2, the zero-padding module 1 pads each data segment with zeros at fixed positions (either before the data segment or after the data segment). The data segments corresponding to the different FEC codes are each padded to information bits with the same length as the mother code.
In S3, the FEC encoding module multiplies information code blocks by a generator matrix in a generator information memory to obtain check code blocks and combines information data segments for encoding with the check code blocks to form FEC codes.
In S4, if the generated check code blocks need to be punctured, a corresponding operation is performed according to the FEC code selector, and a final output result is subjected to electro-optic conversion and transmission.

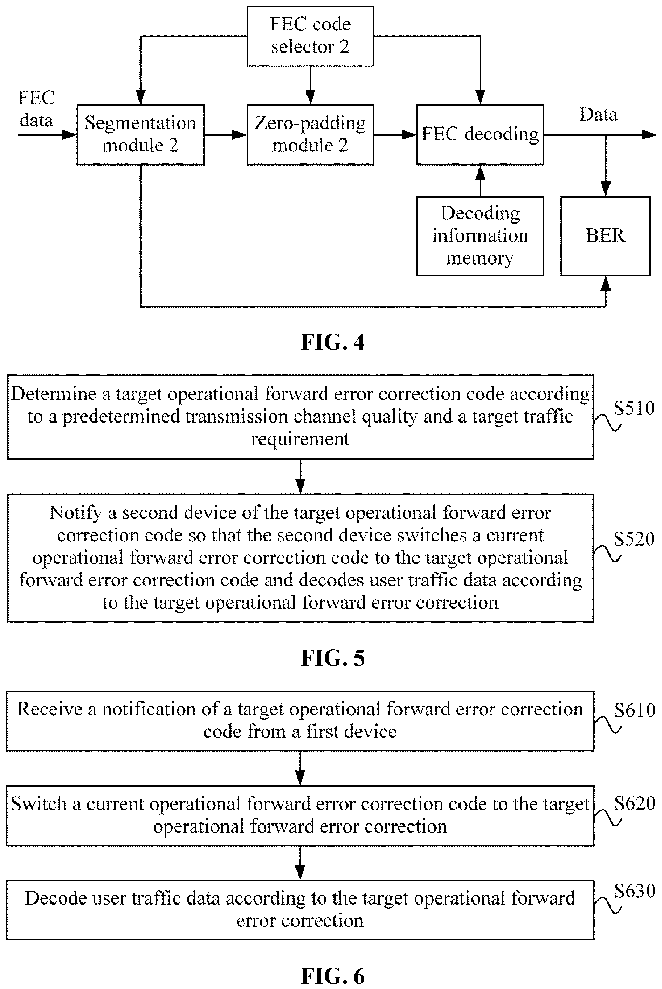

FIG. 4 is a structure diagram of an FEC decoding module according to an embodiment of the present application. The structure of the corresponding FEC decoding module in an ONU is shown in FIG. 4. An FEC code selector 2 is connected to a segmentation module 2, a zero-padding module 2 and the FEC decoding module separately to control decoding. In the embodiment, an implementation process of the FEC decoding module includes the following:
In S1, after an FEC-encoded data stream reaches the segmentation module 2, the FEC-encoded data stream is segmented into different data segments according to different FEC codes, where each data segment is a (shortened, punctured or complete) FEC codeword consisting of information bits and check bits.
In S2, for the information bits and the check bits of each data segment, the zero-padding module 2 pads the (shortened or punctured) data segment with zeros at the corresponding positions. The data segments corresponding to the different FEC codes are each padded to information bits and check bits with the same length as the mother code.
In S3, the FEC decoding module decodes the zero-padded FEC codeword with a check matrix in a decoding information memory to obtain original information data.
In S4, the data is compared with information bits in the data segments obtained by the segmentation module 2 bit by bit to determine a bit error rate (BER).

In an embodiment, FIG. 5 is a flowchart of a forward error correction code switching method according to an embodiment of the present application. The embodiment may be performed by a forward error correction code switching device. For encoding in a downlink direction, the forward error correction code switching device, an OLT, is a first device. As shown in FIG. 5, the embodiment includes S510 and S520.

In S510, a target operational forward error correction code is determined according to a predetermined transmission channel quality and a target traffic requirement.

The transmission channel quality is used for characterizing the quality of an ODN channel for connecting the first device to a second device. In the embodiment, whether the first device enables the detection of the transmission channel quality may be configured by a network manager side. That is, the detection of the transmission channel quality may be enabled manually or automatically, which is not limited.

In the embodiment, after the first device determines the quality of the ODN channel between the first device and the second device, the first device may determine the target operational forward error correction code according to the transmission channel quality and the target traffic requirement. The target traffic requirement may be understood as a requirement for decoding user traffic data. For example, the target traffic requirement may include, but is not limited to, high accuracy with which the user traffic data is decoded and a high rate at which the user traffic data is decoded. The target operational forward error correction code refers to a forward error correction code corresponding to the decoding of the user traffic data. For example, the target operational forward error correction code includes, but is not limited to, a default forward error correction code, a high-throughput forward error correction code, and a high-margin forward error correction code.

In the embodiment, the first device selects a forward error correction code satisfying the target traffic requirement from multiple forward error correction codes according to the transmission channel quality as the target operational forward error correction code.

In S520, the second device is notified of the target operational forward error correction code so that the second device switches a current operational forward error correction code to the target operational forward error correction code and decodes the user traffic data according to the target operational forward error correction code.

The second device refers to an ONU in operation. In the embodiment, after determining the target operational forward error correction code, the first device broadcasts the target operational forward error correction code to all second devices in operation so that after receiving a broadcast message, all the second devices in operation prepare to switch the forward error correction code and after receiving new user traffic data, decode the user traffic data using the target operational forward error correction code, thereby enhancing the adaptability of a PON system to an ODN and improving the flexibility and availability of the PON system without affecting existing traffic quality.

In the embodiment, that the first device notifies the second device of the target operational FEC code may be understood as that the first device directly sends the target operational FEC code to the second device or that the first device sends an index of the target operational FEC code to the second device so that the second device acquires the corresponding FEC code according to the index of the target operational FEC code.

In an embodiment, the forward error correction code switching method applied to the first device further includes sending forward error correction test data to the second device; receiving a bit error rate corresponding to the forward error correction test data and fed back by the second device; and determining a transmission channel quality between the first device and the second device according to the bit error rate.

The forward error correction test data refers to data for testing the quality of the ODN channel between the first device and the second device. In the embodiment, the forward error correction test data is data encoded according to a sequence of FEC codes agreed with the second device. The first device sends the forward error correction test data to the second device. After receiving the forward error correction test data, the second device decodes the forward error correction test data according to the agreed sequence of FEC codes, obtains the bit error rate, and feeds back the bit error rate to the first device. The first device determines the transmission channel quality between the first device and the second device according to the bit error rate and thus determines the target operational forward error correction code according to the transmission channel quality. In practical operation, the first device may send the forward error correction test data to the second device in one transmission or in multiple transmissions, which is not limited. For example, the first device may configure, according to an agreement with the second device, a manner for sending the forward error correction test data.

In an embodiment, that the target operational forward error correction code is determined according to the predetermined transmission channel quality and the target traffic requirement includes determining a set of candidate forward error correction codes according to the predetermined transmission channel quality; and determining the target operational forward error correction code according to the target traffic requirement and the set of candidate forward error correction codes.

The set of candidate forward error correction codes refers to a set of all FEC codes available for the current ODN. In the embodiment, the set of candidate forward error correction codes may include one FEC code or multiple FEC codes, which is not limited. After determining all the FEC codes available for the ODN channel according to the transmission channel quality, the first device selects an FEC code from the set of candidate forward error correction codes according to the target traffic requirement as the target operational forward error correction code.

In an embodiment, before the forward error correction test data is sent to the second device, the forward error correction code switching method applied to the first device further includes: in response to detecting that the second device completes activation and registration, broadcasting a forward error correction test message to the second device. The forward error correction test message refers to an FEC Profile message. In the embodiment, the FEC test message has the following functions: (1) the FEC test message is configured to indicate whether to detect the quality of the ODN channel; (2) the FEC test message is configured to indicate whether the current data is in a state of switching between multiple FEC codes; (3) the FEC test message received again is configured to indicate no need to re-detect the quality of the ODN channel after an ONU is online again. That the ONU is online again may include, but is not limited to, being online again due to various situations such as a crash, a power outage or a failure.

In the embodiment, after online, the second device performs the activation and the registration. In the case where the first device detects that the second device succeeds in the activation and the registration, the first device broadcasts the FEC test message to a newly online second device and broadcasts the FEC test data so that the second device detects the quality of the ODN channel.

In an embodiment, the forward error correction test data may carry one of the current operational forward error correction code or an index of the current operational forward error correction code. In the embodiment, each FEC code is configured with one FEC code index, that is, the corresponding FEC code may be determined according to the FEC code index. Of course, the FEC test data may not carry the current operational forward error correction code or the index of the current operational forward error correction code, which is not limited.

In an embodiment, FIG. 6 is a flowchart of another forward error correction code switching method according to an embodiment of the present application. The embodiment may be performed by a forward error correction code switching device. The forward error correction code switching device may be a second device. For example, the second device may be an ONU. As shown in FIG. 6, the embodiment includes S610 to S630.

In S610, a notification of a target operational forward error correction code is received from a first device.

That the second device receives the notification of the target operational forward error correction code from the first device may be understood as that the second device directly receives the target operational forward error correction code from the first device or that the second device receives an index of the target operational forward error correction code from the first device so that the second device determines the corresponding target operational forward error correction code according to the index of the target operational forward error correction code.

In S620, a current operational forward error correction code is switched to the target operational forward error correction code.

In S630, user traffic data is decoded according to the target operational forward error correction code.

In the embodiment, after receiving the notification of the target operational forward error correction code from the first device, the second device directly switches the current operational forward error correction code to the target operational forward error correction code and decodes the user traffic data using the target operational forward error correction code.

In an embodiment, the forward error correction code switching method applied to the second device further includes receiving forward error correction test data from the first device; and decoding the forward error correction test data to obtain the current operational forward error correction code. In the embodiment, since the second device fails temporarily to know an FEC code to be used, after receiving the FEC test data from the first device, the second device may decode the FEC test data in sequence according to a sequence of FEC codes to obtain the current operational FEC code and a bit error rate corresponding to each FEC code.

In an embodiment, the forward error correction code switching method applied to the second device further includes determining the bit error rate of the forward error correction test data; and feeding back the bit error rate to the first device so that the first device determines a transmission channel quality between the first device and the second device according to the bit error rate.

In the embodiment, the second device decodes the FEC test data according to the used operational FEC code and compares decoded data with original data to determine the bit error rate corresponding to each operational FEC code for decoding the FEC test data and feeds back the bit error rate to the first device so that the first device determines the quality of an ODN channel according to the bit error rate.

In an embodiment, decoding the forward error correction test data to obtain the current operational forward error correction code includes decoding the forward error correction test data in sequence according to a pre-configured sequence of forward error correction codes to obtain the current operational forward error correction code. In the embodiment, since a newly online second device cannot determine that it is currently in a channel detection period, that is, the second device cannot determine an FEC code currently used by the ODN channel, after receiving the forward error correction test data, the second device may directly decode the forward error correction test data in sequence according to the pre-configured sequence of FEC codes and determine, according to BER values after decoding, an FEC code corresponding to a minimum BER value as a current downlink target operational FEC code.

In an embodiment, the sequence of forward error correction codes includes one of: sorting the forward error correction codes in descending order of encoding gains of the forward error correction codes; or a previously used forward error correction code, followed by other forward error correction codes. In the embodiment, the second device may decode the forward error correction test data by firstly using the previously used FEC code and then using the other FEC codes; or the second device may directly decode the forward error correction test data in descending order of the encoding gains of the FEC codes.

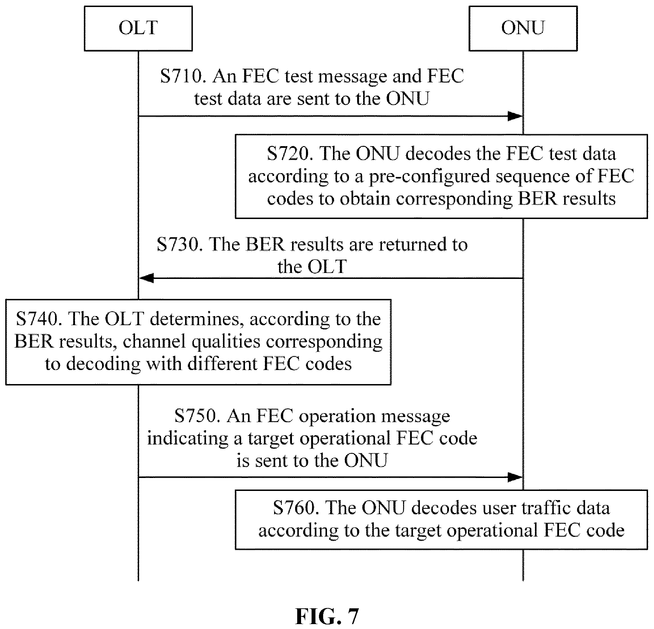

In an embodiment, a transmission process of an FEC test message is described by using an example in which a first device is an OLT and a second device is an ONU. FIG. 7 is a schematic diagram illustrating the implementation of a message mechanism for FEC code switching between an OLT and an ONU according to an embodiment of the present application. As shown in FIG. 7, an implementation process of the message mechanism for FEC code switching between the OLT and the ONU includes the following:
In S710, the FEC test message and FEC test data are sent to the ONU.
In S720, the ONU decodes the FEC test data according to the pre-configured sequence of FEC codes to obtain corresponding BER results.
In S730, the BER results are returned to the OLT.
In S740, the OLT determines, according to the BER results, channel qualities corresponding to decoding with different FEC codes.
In S750, an FEC operation message indicating a target operational FEC code is sent to the ONU.
In S760, the ONU decodes user traffic data according to the target operational FEC code.

In the embodiment, after the OLT detects that the ONU is online and completes activation and registration, the OLT sends the FEC test message and the FEC test data to the ONU. The ONU decodes the received FEC test data according to the pre-configured sequence of FEC codes to obtain a BER result corresponding to each FEC code and feeds back the BER results to the OLT. The OLT determines the corresponding qualities of an ODN channel according to the BER results and determines the target operational FEC code. The OLT sends the FEC operation message to the ONU. After receiving the FEC operation message, the ONU prepares for the FEC code switching. The ONU switches a current operational FEC code to the target operational FEC code and decodes the received user traffic data using the target operational FEC code.

The FEC test message and the FEC operation message have the same message body but different values of an FEC_request field and an FEC codeword field in the message body. In the embodiment, in the case where the OLT sends the FEC test message to the ONU, since the ONU directly performs decoding according to the pre-configured sequence of FEC codes, the ONU does not read the FEC codeword field. In the case where the OLT sends the FEC operation message to the ONU, the OLT notifies the ONU through the FEC operation message that the subsequently received user traffic data needs to be decoded according to the indicated target operational FEC code. A different value of the FEC codeword field is used to represent an FEC code corresponding to the target operational FEC code (for example, if FEC codeword is 0x0000, it indicates that the target operational FEC code is FEC code 1; if FEC codeword is 0x000F, it indicates that the target operational FEC code is FEC code 2; and if FEC codeword is 0x00F0, it indicates that the target operational FEC code is FEC code 3). Of course, in the case where the OLT sends the FEC test message to the ONU, a value of the FEC_request field is 0x00, and it indicates FEC switching in a test process. In the case where the OLT sends the FEC operation message to the ONU, the value of the FEC_request field is 0x0F, and it indicates FEC switching in a normal operation process.

A message and a message response are sent between the OLT and the ONU so that the FEC code switching in a downlink direction is performed. The FEC test message and the FEC operation message may each be a PLOAM message, an ONU management and control interface (OMCI) message mechanism or the like. Before the FEC code switching is implemented, an ODN channel environment between the OLT and each ONU needs to be known so that which FEC code to use is determined. To test the channel environment without affecting the traffic quality of a normal ONU, the sending of the FEC test message may be configured in an online and activation link of the ONU in the present application, which may be configured by a network manager side and may be enabled manually or automatically, so that normal user traffic is not affected.

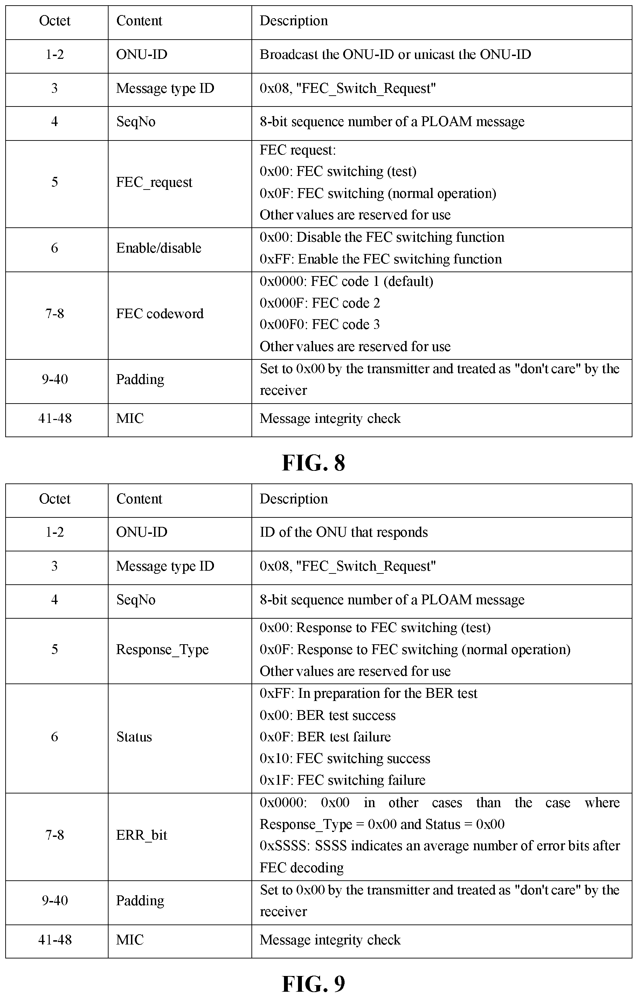

Since the ONU is online randomly, to know the situation of the entire ODN network, the OLT needs to perform statistics and records for a certain period of time. When a PON system supports multiple FEC codes in the downlink direction, each online and registered ONU cannot know which FEC is currently an operational FEC code and may perform decoding by traversing all configurable FECs and select an FEC code with the minimum BER to perform subsequent data decapsulation and processing. After the ONU succeeds in registration and acquires an ODN channel environment test message from the OLT, the ONU tests channel qualities according to multiple FEC codes and their sequence configured and agreed with the OLT and feeds back BERs. If the ODN channel environment test message is not acquired, the ONU directly enters a normal operation mode. When the ONU encounters a failure of decoding with a certain FEC code, the ONU returns a decoding failure response. After the testing is completed, the PON system switches to a currently configured operational FEC code to perform normal traffic transmission. With the PLOAM message as an example, a format of the FEC test message or switching message sent by the OLT to the ONU is defined as shown in FIG. 8, and a message format of the message response sent by the ONU to the OLT is defined as shown in FIG. 9.

FIG. 8 is a schematic diagram illustrating a configuration of a downlink PLOAM message format for FEC code switching according to an embodiment of the present application. As shown in FIG. 8, the downlink PLOAM message format for FEC code switching includes FEC_request. If FEC_request is 0x00, it indicates FEC switching in the test process; if FEC_request is 0x0F, it indicates FEC switching in the normal operation process. The downlink PLOAM message for FEC code switching further includes FEC codeword. If FEC codeword is 0x0000, it indicates that the current operational FEC code or the target operational FEC code is FEC code 1; if FEC codeword is 0x000F, it indicates that the current operational FEC code or the target operational FEC code is FEC code 2; and if FEC codeword is 0x00F0, it indicates that the current operational FEC code or the target operational FEC code is FEC code 3. The downlink PLOAM message for FEC code switching further includes an Enable/disable flag bit. If Enable/disable is 0x00, it indicates that an FEC switching function is disabled. If Enable/disable is 0xFF, it indicates that the FEC switching function is enabled.

FIG. 9 is a schematic diagram illustrating a configuration of an uplink PLOAM message response format for FEC code switching according to an embodiment of the present application. As shown in FIG. 9, the uplink PLOAM message response format for FEC code switching includes Status bits, ERR_bit bits and Response_Type bits. If Response_Type is 0x00, it indicates a response to FEC switching in the test process. If Response_Type is 0x0F, it indicates a response to FEC switching in the normal operation process. If Status is 0xFF, it indicates preparing for a BER test. If Status is 0x00, it indicates that the BER test succeeds. If Status is 0x0F, it indicates that the BER test fails. If Status is 0x10, it indicates that the FEC switching succeeds. If Status is 0x1F, it indicates that the FEC switching fails. If ERR_bit is 0x0000, it indicates 0x00 in other cases than the case where Response_Type is 0x00 and Status is 0x00. If ERR_bit is 0xSSSS, SSSS indicates an average number of error bits after FEC decoding.

The methods and apparatuses (system) of the present application can implement an operation mode in which multiple FEC codes are switchable on the basis that the structure of a downlink frame specified in a standard of the related art is not changed so that a PON system with switchable FEC codes under a broadcast channel is implemented with relatively low technical complexity, thereby enhancing the adaptability of the PON system to the ODN and improving the flexibility and availability of the PON without affecting existing traffic quality.

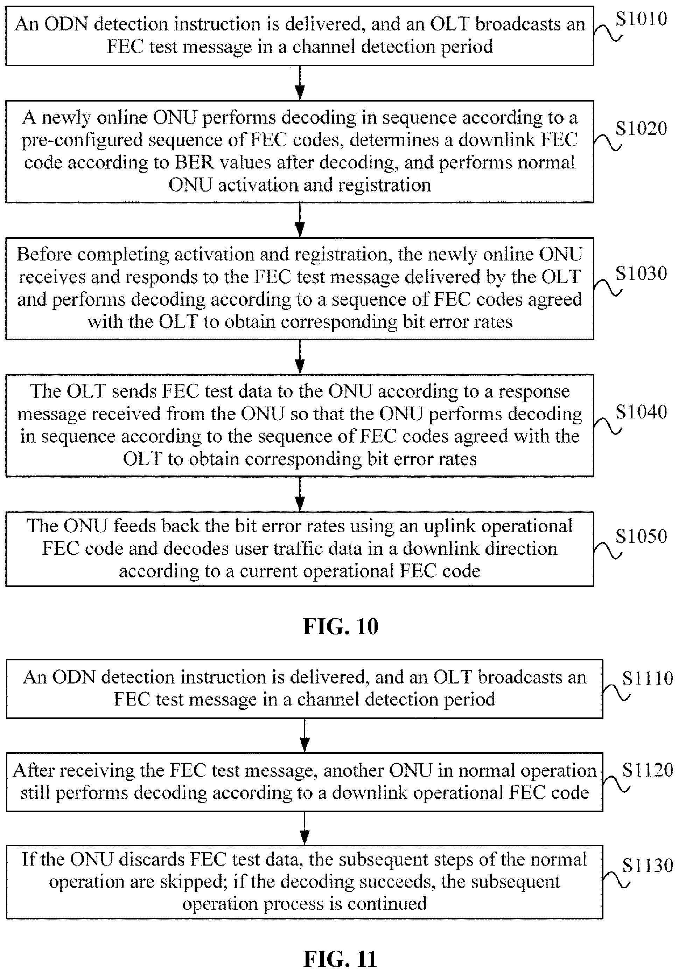

In an embodiment, a process of detecting the quality of an ODN channel by an online ONU is described using an example in which a first device is an OLT and a second device is an ONU. FIG. 10 is a flowchart of detection of an optical channel by a newly online ONU according to an embodiment of the present application. In the embodiment, whether the OLT enables channel quality detection may be configured by a network manager. The channel quality detection may be enabled manually or automatically. Once the channel quality detection is enabled, the OLT and the ONU operate in a detection period according to the steps shown in FIG. 10.

In S1010, an ODN detection instruction is delivered, and the OLT broadcasts an FEC test message in a channel detection period.

In the embodiment, the network manager delivers the ODN detection instruction. In the channel detection period, a PON system adopts a default operational FEC code (for example, an FEC code that yields a high ODN margin). As long as the online ONU is detected by the OLT and completes activation and registration, the OLT broadcasts the FEC test message as configured. For example, the FEC test message is broadcasted as long as an ONU is online and completes activation and registration or broadcasted only after the newly online ONU completes activation and registration. The newly online ONU refers to an ONU that is online for the first time.

In S1020, the newly online ONU performs decoding in sequence according to a pre-configured sequence of FEC codes, determines a downlink FEC code according to BER values after decoding, and performs normal ONU activation and registration.

In the embodiment, since the newly online ONU does not know whether it is currently in the channel detection period and thus cannot determine which operational FEC code is used by the ODN, the newly online ONU may perform decoding in sequence according to the configured sequence of FEC codes (for example, according to a previously used FEC code and then other FEC codes or according to FEC codes in descending order of ODN margins) and determine, according to the BER values after decoding, an FEC corresponding to a minimum BER as a current downlink operational FEC code. In the decoding process, if decoding with a certain FEC code fails, the decoding with this FEC code is directly skipped and decoding is performed with another FEC code. After the current operational FEC code is determined, the ONU may perform activation and registration.

In an activation and registration stage, an indication field of the downlink operational FEC may be added to a Channel_Profile or System_Profile PLOAM message to further ensure that the operational FEC code determined by the ONU through decoding is correct.

After all the FEC codes are traversed, if each BER is very high and the ONU cannot perform normal activation and registration, maintenance needs to be performed according to a maintenance process.

In S1030, before completing activation and registration, the newly online ONU receives and responds to the FEC test message delivered by the OLT and performs decoding according to a sequence of FEC codes agreed with the OLT to obtain corresponding bit error rates.

In the embodiment, in addition to completing activation and registration, the newly online ONU receives the FEC test message delivered by the OLT, performs decoding according to the sequence of FEC codes agreed with the OLT to obtain the bit error rates, and responds to the test message. The format of the test message sent by the OLT is shown in FIG. 8, where FEC_Request = 0x00 and FEC codeword is ignored by the ONU.

If an ONU that has completed ODN detection in the detection period goes online again, Enable/disable in the test message sent by the OLT is 0x00, and the detection of the online ONU is disabled. In addition, if the activation and registration of the online ONU are not in the channel detection period of the ODN, the detection of the online ONU is also disabled.

When the ONU receives, in a test period, a message to enable ODN testing, the ONU prepares for testing, for example, prepares to segment subsequently received data according to requirements of the FEC codes traversed in sequence and sends a message response to the OLT. The response format is shown in FIG. 9, where Response_Type = 0x00 and Status = 0xFF.

In S1040, the OLT sends FEC test data to the ONU according to a response message received from the ONU so that the ONU performs decoding in sequence according to the sequence of FEC codes agreed with the OLT to obtain corresponding bit error rates.

In the embodiment, the OLT sends the FEC test data to the ONU according to the response message received from the ONU. The test data is data encoded according to the sequence of FEC codes agreed with the ONU. When receiving the data, the ONU performs decoding according to the agreed sequence of FEC codes to obtain the corresponding bit error rates. The data encoded with these different FEC codes may be sent by the OLT in one transmission or in multiple transmissions, which is specifically configured according to an agreement with the ONU.

The agreement on the sequence of code s and the agreement on the test data between the OLT and the ONU may be specified in an initial configuration between the OLT and the ONU.

In S 1050, the ONU feeds back the bit error rates using an uplink operational FEC code and decodes user traffic data in the downlink direction according to the current operational FEC code.

After completing the testing, the ONU automatically switches to the uplink operational FEC code for encoding and the downlink operational FEC code for decoding and feeds back the tested numbers of error bits corresponding to the different FEC codes to the OLT. Similarly, to feed back test results, the ONU may feed back multiple messages (distinguished by SeqNo) in one transmission after completing the whole testing or feed back one result after testing one FEC code. For a test success, Status = 0x00 in a feedback message. For a test failure, Status = 0x0F.

In an embodiment, FIG. 11 is a flowchart of a response of an ONU in normal operation to an FEC test message according to an embodiment of the present application. When a newly online ONU tests an ODN channel, since a PON system adopts a broadcast communication manner in a downlink direction, ONUs in normal operation also receive FEC test data. When receiving the FEC test data, these ONUs in normal operation perform corresponding processing. As shown in FIG. 11, a response process of the ONU in normal operation to the FEC test message in the embodiment includes S1110 to S1130.

In S1110, an ODN detection instruction is delivered, and an OLT broadcasts the FEC test message in a channel detection period.

In the embodiment, a network manager delivers the ODN detection instruction. In the channel detection period, as long as an online ONU is detected by the OLT and completes activation and registration, the OLT broadcasts the FEC test message as configured. For example, the FEC test message is broadcasted as long as an ONU is online and completes activation and registration or broadcasted only after the newly online ONU completes activation and registration. The newly online ONU refers to an ONU that is online for the first time.

In S1120, after receiving the FEC test message, another ONU in normal operation still performs decoding according to a downlink operational FEC code.

In the embodiment, after receiving the broadcasted FEC test message, another ONU in normal operation knows that an FEC decoding test is to be performed. Since the test is only performed by the newly online ONU, these ONUs in normal operation still perform decoding according to the downlink operational FEC code. Therefore, if an error occurs in a decoding process, received FEC test data is directly discarded.

In S1130, if the ONU discards the FEC test data, the subsequent steps of the normal operation are skipped; if the decoding succeeds, the subsequent operation process is continued.

In the embodiment, after discarding the FEC test data received in the above step, these ONUs in operation further skip the subsequent steps of the normal operation and wait for the next operation cycle. If the decoding succeeds, the subsequent operation process is continued.

After receiving the broadcasted test message, these ONUs in normal operation do not respond.

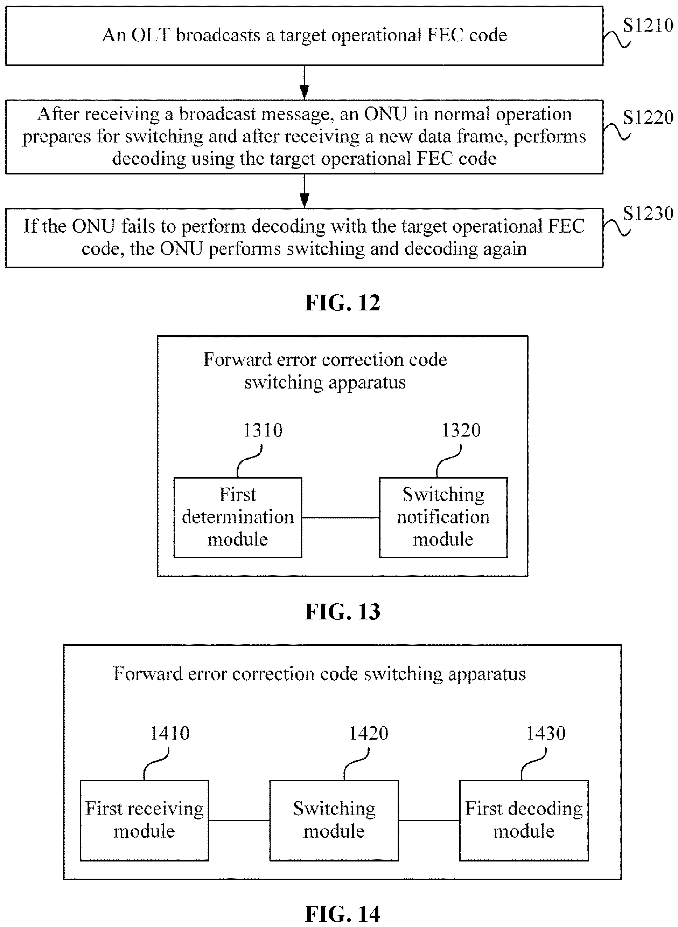

In an embodiment, FIG. 12 is a flowchart of switching of an operational FEC code according to an embodiment of the present application. When an OLT receives ODN channel detection results from all ONUs, the OLT performs statistics and an analysis on a channel situation of the whole ODN, finds a set of FEC codes available for a current channel, and reports the set to a network management system. Then, an FEC code is switched manually or automatically by the OLT according to configuration rules of a PON system. The whole PON system switches the operational FEC code as described below.

In S1210, the OLT broadcasts a target operational FEC code.

In the embodiment, the OLT broadcasts the target operational FEC code (that is, an FEC code to be switched to) to all ONUs in operation.

In S1220, after receiving a broadcast message, an ONU in normal operation prepares for switching and after receiving a new data frame, performs decoding using the target operational FEC code.

In the embodiment, after receiving the broadcast message, all ONUs in normal operation prepare for switching, wait for the new data frame, and perform decoding with the new operational FEC code. A newly online ONU directly acquires a current operational FEC code through decoding.

In S1230, if the ONU fails to perform decoding with the target operational FEC code, the ONU performs switching and decoding again.

In the embodiment, if FEC decoding fails after the ONU switches the operational FEC code, the ONU performs switching again. If the FEC decoding still fails after multiple attempts, the ONU restarts and enters an activation and registration process of an online ONU.

In an embodiment, if an ONU is not successfully activated, ONUs under the same PON port may switch to an operational FEC code that yields a relatively large margin.

As the number of users increases, it is possible that a newly added ONU cannot perform normal activation and registration with the current operational FEC code. In this case, service activation personnel may notify or remotely operate the OLT to switch an operational code of all the ONUs under the same PON port to the FEC code that yields a relatively large ODN margin, and then activation and registration are performed again. If an operational FEC code that yields a largest ODN margin cannot satisfy the activation of a current ONU, troubleshooting needs to be performed according to a maintenance process.

In an embodiment, FIG. 13 is a block diagram of a forward error correction code switching apparatus according to an embodiment of the present application. The embodiment is applied to a first device. The first device may be an OLT. As shown in FIG. 13, the embodiment includes a first determination module 1310 and a switching notification module 1320.

The first determination module 1310 is configured to determine a target operational forward error correction code according to a predetermined transmission channel quality and a target traffic requirement.

The switching notification module 1320 is configured to notify a second device of the target operational forward error correction code so that the second device switches a current operational forward error correction code to the target operational forward error correction code and decodes user traffic data according to the target operational forward error correction code.

In an embodiment, the forward error correction code switching apparatus applied to the first device further includes a sending module, a receiving module and a second determination module.

The sending module is configured to send forward error correction test data to the second device.

The receiving module is configured to receive a bit error rate corresponding to the forward error correction test data and fed back by the second device.

The second determination module is configured to determine a transmission channel quality between the first device and the second device according to the bit error rate.

In an embodiment, the first determination module 1310 includes a first determination unit and a second determination unit.

The first determination unit is configured to determine a set of candidate forward error correction codes according to the predetermined transmission channel quality.

The second determination unit is configured to determine the target operational forward error correction code according to the target traffic requirement and the set of candidate forward error correction codes.

In an embodiment, before the forward error correction test data is sent to the second device, the forward error correction code switching apparatus applied to the first device further includes a broadcast module.

The broadcast module is configured to, in response to detecting that the second device completes activation and registration, broadcast a forward error correction test message to the second device.

The forward error correction code switching apparatus of this embodiment is configured to implement the forward error correction code switching method of the embodiment shown in FIG. 5. The forward error correction code switching apparatus of this embodiment has similar implementation principles and technical effects. The details are not repeated here.

In an embodiment, FIG. 14 is a block diagram of another forward error correction code switching apparatus according to an embodiment of the present application. The embodiment is applied to a second device. As shown in FIG. 14, the embodiment includes a first receiving module 1410, a switching module 1420 and a first decoding module 1430.

The first receiving module 1410 is configured to receive a notification of a target operational forward error correction code from a first device.

The switching module 1420 is configured to switch a current operational forward error correction code to the target operational forward error correction code.

The first decoding module 1430 is configured to decode user traffic data according to the target operational forward error correction code.

In an embodiment, the forward error correction code switching apparatus applied to the second device further includes a second receiving module and a second decoding module.

The second receiving module is configured to receive forward error correction test data from the first device.

The second decoding module is configured to decode the forward error correction test data to obtain the current operational forward error correction code.

In an embodiment, the forward error correction code switching apparatus applied to the second device further includes a determination module and a feedback module.

The determination module is configured to determine a bit error rate of the forward error correction test data.

The feedback module is configured to feed back the bit error rate to the first device so that the first device determines a transmission channel quality between the first device and the second device according to the bit error rate.

In an embodiment, the second decoding module is configured to decode the forward error correction test data in sequence according to a pre-configured sequence of forward error correction codes to obtain the current operational forward error correction code.

In an embodiment, the sequence of forward error correction codes includes one of: sorting the forward error correction codes in descending order of encoding gains of the forward error correction codes; or a previously used forward error correction code, followed by other forward error correction codes.

The forward error correction code switching apparatus of this embodiment is configured to implement the forward error correction code switching method of the embodiment shown in FIG. 6. The forward error correction code switching apparatus of this embodiment has similar implementation principles and technical effects. The details are not repeated here.

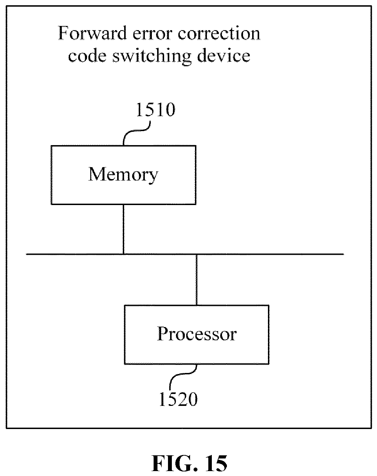

In an embodiment, FIG. 15 is a structure diagram of a forward error correction code switching device according to an embodiment of the present application. As shown in FIG. 15, the device of the present application includes a processor 1510 and a memory 1520. One or more processors 1510 may be provided in the device. One processor 1510 is shown as an example in FIG. 15. One or more memories 1520 may be provided in the device. One memory 1520 is shown as an example in FIG. 15. The processor 1510, the memory 1520 and a communication module 1530 of the device may be connected via a bus or in other manners. The connection via a bus is shown as an example in FIG. 15. In the embodiment, the device may be a first device. For example, the first device may be an OLT.

As a computer-readable storage medium, the memory 1520 may be configured to store software programs, computer-executable programs and modules, such as program instructions/modules corresponding to the device of any embodiment of the present application (for example, the first determination module 1310 and the switching notification module 1320 in the forward error correction code switching apparatus). The memory 1520 may include a program storage region and a data storage region. The program storage region may store an operating system and an application program required by at least one function. The data storage region may store data created according to the use of the device. Additionally, the memory 1520 may include a high-speed random-access memory and may also include a nonvolatile memory, such as at least one magnetic disk memory, a flash memory or another nonvolatile solid-state memory. In some examples, the memory 1520 may further include memories that are remotely disposed relative to the processor 1510. These remote memories may be connected to the device via a network. Examples of the preceding network include, but are not limited to, the Internet, an intranet, a local area network, a mobile communication network and a combination thereof.

In the case where the forward error correction code switching device is the first device, the device may be configured to perform the forward error correction code switching method applied to the first device according to any preceding embodiment and has corresponding functions and effects.

In the case where the forward error correction code switching device is a second device, the device may be configured to perform the forward error correction code switching method applied to the second device according to any preceding embodiment and has corresponding functions and effects.

Embodiments of the present application further provide a storage medium including computer-executable instructions. When the computer-executable instructions are executed by a computer processor, the computer processor performs a forward error correction code switching method applied to a first device. The method includes determining a target operational forward error correction code according to a predetermined transmission channel quality and a target traffic requirement; and notifying a second device of the target operational forward error correction code to enable the second device to switch a current operational forward error correction code to the target operational forward error correction code and decode user traffic data according to the target operational forward error correction code.

Embodiments of the present application further provide a storage medium including computer-executable instructions. When the computer-executable instructions are executed by a computer processor, the computer processor performs a forward error correction code switching method applied to a second device. The method includes receiving a notification of a target operational forward error correction code from a first device; switching a current operational forward error correction code to the target operational forward error correction code; and decoding user traffic data according to the target operational forward error correction code.

It is to be understood by those skilled in the art that the term "user equipment" encompasses any suitable type of wireless user equipment, for example, a mobile phone, a portable data processing apparatus, a portable web browser or a vehicle-mounted mobile station.

Generally speaking, embodiments of the present application may be implemented in hardware or special-purpose circuits, software, logic or any combination thereof. For example, some aspects may be implemented in hardware while other aspects may be implemented in firmware or software executable by a controller, a microprocessor or another computing apparatus, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data or source or object codes written in any combination of one or more programming languages.

A block diagram of any logic flow among the drawings of the present application may represent program steps, may represent interconnected logic circuits, modules and functions, or may represent a combination of program steps and logic circuits, modules and functions. Computer programs may be stored in a memory. The memory may be of any type suitable for a local technical environment and may be implemented using any suitable data storage technology, such as, but not limited to, a read-only memory (ROM), a random-access memory (RAM) or an optical memory device and system (for example, a digital video disc (DVD) or a compact disc (CD)). Computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA) and a processor based on a multi-core processor architecture.

## Claims

1. A forward error correction code switching method, applied to a first device, comprising:
determining a target operational forward error correction code according to a predetermined transmission channel quality and a target traffic requirement; and
notifying a second device of the target operational forward error correction code to enable the second device to switch a current operational forward error correction code to the target operational forward error correction code and decode user traffic data according to the target operational forward error correction code.

2. The forward error correction code switching method of claim 1, further comprising:
sending forward error correction test data to the second device;
receiving a bit error rate corresponding to the forward error correction test data and fed back by the second device; and
determining a transmission channel quality between the first device and the second device according to the bit error rate.

3. The forward error correction code switching method of claim 1 or 2, wherein determining the target operational forward error correction code according to the predetermined transmission channel quality and the target traffic requirement comprises:
determining a set of candidate forward error correction codes according to the predetermined transmission channel quality; and
determining the target operational forward error correction code according to the target traffic requirement and the set of candidate forward error correction codes.

4. The forward error correction code switching method of claim 2, before sending the forward error correction test data to the second device, further comprising:
in response to detecting that the second device completes activation and registration, broadcasting a forward error correction test message to the second device.

5. A forward error correction code switching method, applied to a second device, comprising:
receiving a notification of a target operational forward error correction code from a first device;
switching a current operational forward error correction code to the target operational forward error correction code; and
decoding user traffic data according to the target operational forward error correction code.

6. The forward error correction code switching method of claim 5, further comprising:
receiving forward error correction test data from the first device; and
decoding the forward error correction test data to obtain the current operational forward error correction code.

7. The forward error correction code switching method of claim 6, further comprising:
determining a bit error rate of the forward error correction test data; and
feeding back the bit error rate to the first device to enable the first device to determine a transmission channel quality between the first device and the second device according to the bit error rate.

8. The forward error correction code switching method of claim 6, wherein decoding the forward error correction test data to obtain the current operational forward error correction code comprises:
decoding the forward error correction test data in sequence according to a pre-configured sequence of forward error correction codes to obtain the current operational forward error correction code.

9. The forward error correction code switching method of claim 8, wherein the sequence of forward error correction codes comprises one of:
sorting the forward error correction codes in descending order of encoding gains of the forward error correction codes; or
sorting a previously used forward error correction code first, followed by other forward error correction codes than the previously used forward error correction code.

10. A forward error correction code switching device, comprising a memory and at least one processor;
wherein the memory is configured to store at least one program;
wherein the at least one program is executed by the at least one processor to cause the at least one processor to perform the forward error correction code switching method of any one of claims 1 to 4 or claims 5 to 9.

11. A storage medium, which is configured to store a computer program, wherein the computer program is executed by a processor to cause the processor to perform the forward error correction code switching method of any one of claims 1 to 4 or claims 5 to 9.
